# EUROPEAN PATENT APPLICATION

(11) **EP 1 408 617 A1**
(43) Date of publication of application: **14.04.2004**
(21) Application number: 03255771.2
(22) Date of filing: 16.09.2003
(51) Int. Cl.: H04B 1/10

(54) **Signal receiving method and apparatus**

(30) Priority: 07.10.2002 JP 2002294175
(71) Applicant: Pioneer Corporation, Meguro-ku, Tokyo (JP)
(72) Inventor: Tsuboi, Yoshimi c/o Pioneer Corporation, Kawagoe-shi Saitama (JP)
(74) Representative: Haley, Stephen

(57) **Abstract**

In a signal receiving area, the multipath noise occurred at regular intervals is counted by a counter to acquire a multipath noise occurrence frequency. The time constant is set according to the multipath noise occurrence frequency by a time constant circuit. The stereo separation ratio is controlled by a separation circuit according to the time constant, thereby setting the restoration time from the monaural mode to the stereo mode at an optimum value according to a signal receiving area.

## Description

The present disclosure relates to the subject matter contained in Japanese Patent Application No. 2002-294175 filed on October 7, 2002, which is incorporated herein by reference in its entirety.

The present invention relates to a signal receiving method and apparatus for reducing the influence of a noise, which is generated according to a multipath, on sound quality.

In a conventional circuit of reducing the influence of a noise on sound quality, the influence of the multipath noise on sound quality is reduced by switching a phonic mode from a stereo mode to a monaural mode when a multipath noise is detected, thereby reducing the stereo separation ratio.

In the conventional circuit, for example, when the multipath noise disappears, a time constant circuit takes a prescribed time for restoration from the monaural mode to the stereo mode so that the stereo separation ratio is gradually restored.

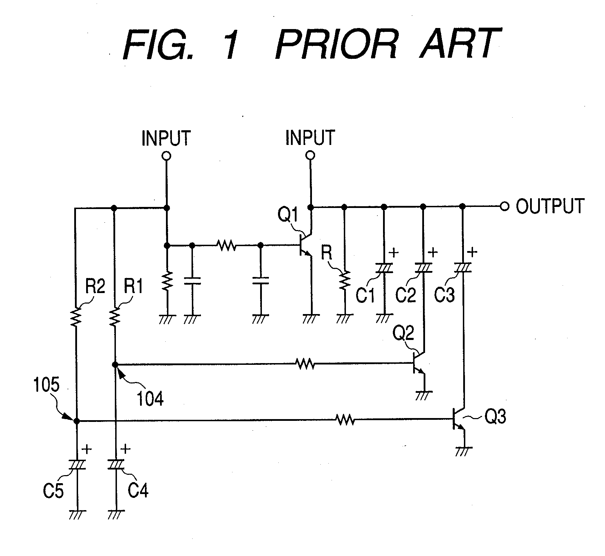

An example of the conventional circuit for reducing the influence of the multipath noise on the sound quality is shown in Fig. 1. In the conventional circuit, where the phonic mode is forcibly switched from the stereo mode to the monaural mode when the multipath noise is interfered, time constant circuits 104 and 105, which serve to detect the interfering duration time of the multipath noise, are connected to capacitors C2 and C3 for controlling the restoration time from the monaural mode to the stereo mode in such a manner that they are selectively connected to a capacitor C1 through transistors Q2 and Q3 which are on-off controlled by the outputs from the time constant circuits 104 and 105.

The multipath noise occurs by reflection of a signal to a building or a mountain, so that the occurrence of the multipath noise depends on the presence or absence of a building in an area where a signal receiving apparatus is installed, or the topography of the area. Therefore, the occurrence of the multipath noise does not change frequently in a specific area, and it rarely occurs an abrupt and deep multipath noise or the multipath noise with a long duration.

On the other hand, for example, in a signal receiving apparatus for a mobile object, a signal receiving area changes according to the movement of the mobile object. The mobile object passes the signal receiving area where the multipath noise occurs frequently or occasionally. During such movement, the occurrence of the multipath noise, particularly the multipath noise occurrence frequency changes.

In the signal receiving area (with a high multipath noise occurrence frequency) where the multipath occurs frequently, the restoration time from the monaural mode to the stereo mode becomes short, whereby a user is senses the changing of the mode as a changing in the sound volume or in auditory lateralization. On the other hand, in the signal receiving area (with a low multipath noise occurrence frequency) where the multipath noise occurs occasionally, the restoration time from the monaural mode to the stereo mode becomes long, whereby the period of monaural reception becomes excessively long. The prolonging of the monaural mode is not preferable in audibility.

It is therefore an object of the invention to provide a signal receiving method and apparatus capable of setting a restoration time from a monaural mode to a stereo mode to an optimum value according to a signal receiving area to improve audibility, thereby reducing the influence of a multipath noise on sound quality.

In order to achieve the object, according to a first aspect of the invention, there is provided a signal receiving method including: acquiring an occurrence frequency of a multipath noise in a signal by detecting a number of multipath noises occurred in the signal within a predetermined time; and controlling a stereo separation ratio for decoding the signal in accordance with the occurrence frequency of the multipath noise.

According to a second aspect of the invention, there is provided a signal receiving apparatus including: a multipath detection section configured to acquire an occurrence frequency of a multipath noise in a signal by detecting a number of multipath noises occurred in the signal within a predetermined time; and a control section configured to control a stereo separation ratio for decoding the signal in accordance with the occurrence frequency of the multipath noise.

The above objects and advantages of the present invention will become more apparent by describing in detail a preferred exemplary embodiment thereof with reference to the accompanying drawings, wherein:
Fig. 1 is a diagram showing a conventional circuit for reducing the influence of a multipath noise on sound quality;
Fig. 2 is a block diagram showing the configuration of an FM receiver according to an embodiment of the invention;
Fig. 3 is a flowchart for explaining a signal receiving method for reducing the influence of a multipath noise on sound quality according to an embodiment of the invention;
Figs. 4A through 4E are waveform charts for explaining the operation of counting occurrence timings of a multipath noise signal in the FM receiver; and
Fig. 5 is a waveform chart of an example in which time constants are set at five stages according to the multipath noise occurrence frequency of the multipath noise.

The signal receiving method and apparatus according to the present invention are those for reducing the influence of a multipath noise on sound quality. Referring now to the drawings, a detailed explanation will be given on an FM receiver as shown as one embodiment of the invention.

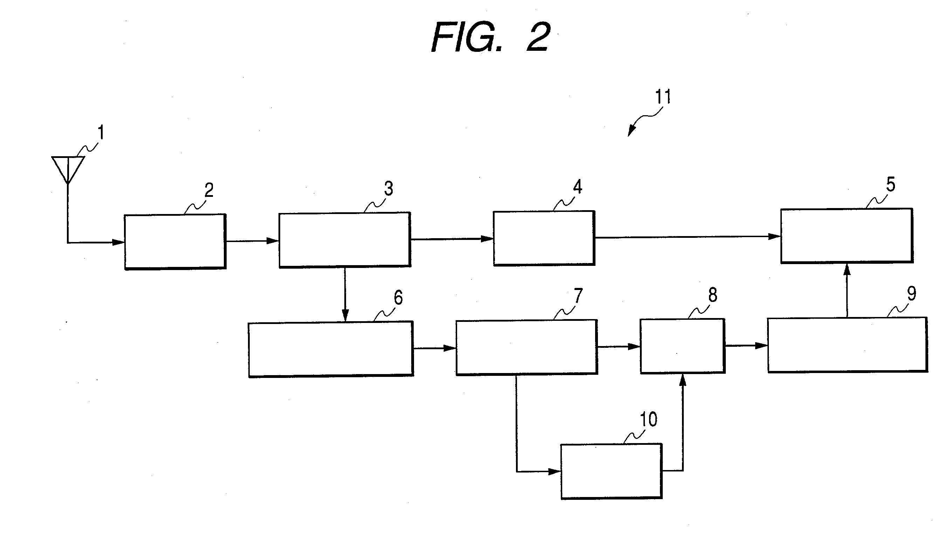

Fig. 2 is a block diagram showing the arrangement of the FM receiver (signal receiving apparatus) according to one embodiment of this invention. As seen from Fig. 2, an FM receiver 11 includes an antenna 1, a front end 2, an intermediate frequency amplifying circuit 3, an FM demodulating circuit 4, a stereo decoder 5, a signal meter outputting circuit 6, a multipath noise detecting circuit 7, a time constant circuit 8, a separation controlling circuit 9 and a counter 10.

The antenna 1 is an antenna for receiving a broadcasting radio wave. The front end 2 is a circuit for producing a desired intermediate frequency wave extracted from the radio wave received by the antenna 1.

The intermediate frequency amplifying circuit 3 is a circuit for amplifying the intermediate frequency produced from the front end 2.

The FM demodulating circuit 4 is a circuit for extracting an audio signal form the amplified intermediate frequency wave. The stereo decoder 5 is a circuit for producing left and right stereo signals divided from the audio signal.

The signal meter outputting circuit 6 is a circuit for outputting a DC voltage proportional to the amplitude indicative of an electric field intensity from the intermediate frequency amplifying circuit 3 and also outputting an AC voltage owing to amplitude modulation of the FM radio wave when a multipath noise occurs.

The multipath noise detecting circuit 7 is a circuit for detecting the AC component of the output from the signal meter outputting circuit 6 using a filter, converting it into a DC voltage and producing the DC voltage as a shaped pulse waveform.

The time constant circuit 8 is a circuit for providing a time constant to the pulse signal output from the multipath noise detecting circuit 7.

The separation controlling circuit 9 is a circuit for controlling the stereo-separation (degree in separation of the left and the right stereo signals) of the stereo decoder 5 according to the output from the time constant circuit 8, thereby reducing the multipath noise.

The counter 10 is a counter for counting the pulse outputs occurred within a prescribed time from the multipath noise detecting circuit 7 to detect an occurrence frequency of the multipath noise (Hereinafter, referred to as "multipath noise occurrence frequency"), which is a number of multipath noises occurred within the predetermined time.

It should be noted that the time constant of the above time constant circuit 8 is set according to the multipath noise occurrence frequency produced from the counter 10.

The FM receiver 11 according to the embodiment is suitable for the FM receiver for a mobile object (e.g. a vehicle or a cellular phone), and hence can perform the reception with the reduced influence of the multipath noise on the sound quality when the occurrence of the multipath noise, particularly the multipath noise occurrence frequency changes according to the change of signal receiving area by the movement.

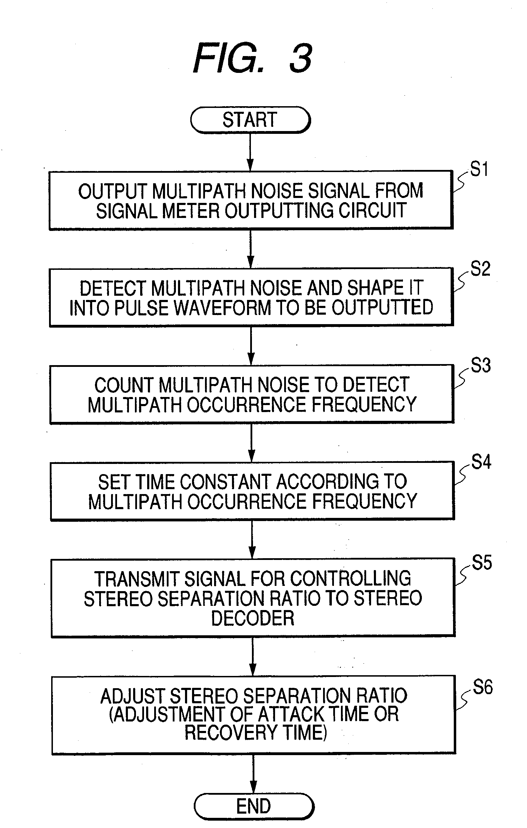

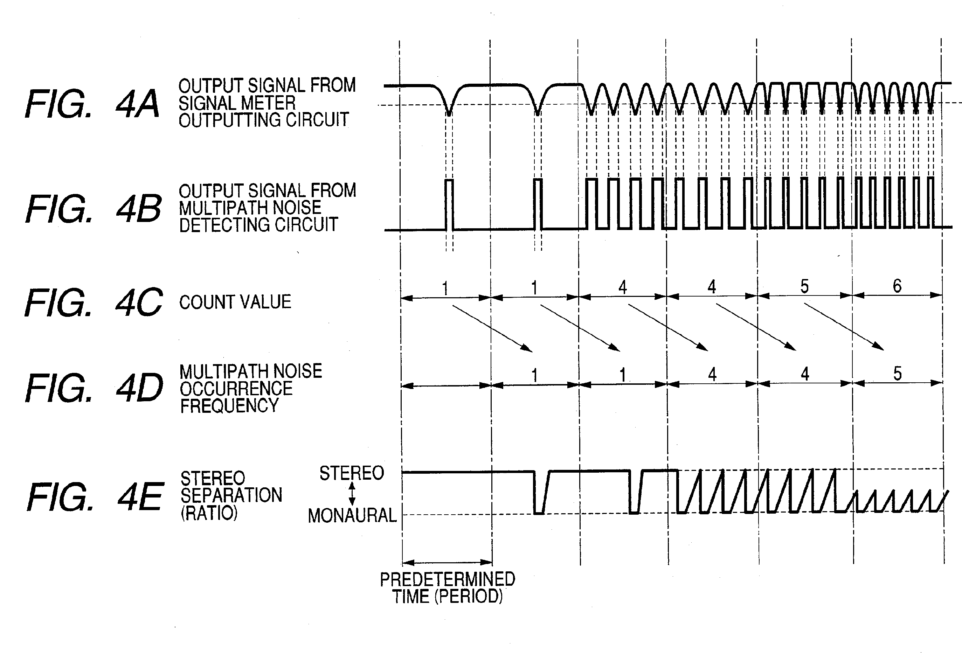

Referring to Figs. 3 and 4, an explanation will be given of a signal receiving method for reducing the influence of the multipath noise on the sound quality according to this invention. Fig. 3 is a flow chart for explaining a signal receiving method for reducing the influence of the multipath noise on the sound quality. Fig. 4 is a waveform chart for explaining the operation of counting occurrence timings of a multipath noise signal.

First, the multipath noise signal is produced. Fig. 4A shows an output signal from the signal meter producing circuit 6.

As seen from Fig. 4A, the output signal from the signal meter outputting circuit 6 includes a DC voltage proportional to the amplitude indicative of an electric field intensity from the intermediate frequency amplifying circuit 3 and also includes an AC voltage owing to amplitude modulation of the FM radio wave when the multipath noise occurs. The AC component of the output signal from the signal meter outputting circuit 6, in response to the multipath noise, increases in the signal level because of noise plus the harmonic distortion component of a low frequency modulation component (step S1).

Next, the multipath noise is detected and reshaped in a pulse waveform. Fig. 4B illustrates an output signal from the multipath noise detecting circuit.

When the multipath noise occurs, the AC component (high frequency noise component) of the output signal from the signal meter producing circuit 6 increases. The multipath noise is detected by the multipath noise detecting circuit 7 through a bypath filter or band-pass filter, converted into a DC voltage and reshaped into a pulse waveform (Fig. 4B) to be supplied to the counter 10 (step S2).

Next, the multipath noise occurrence frequency is detected. The output signal from the multipath noise detecting circuit 7, as shown in Fig. 4B, is supplied to the counter 10 in which the number of pulses contained in the output signal is counted at regular periods or intervals (counted value in Fig. 4C). The multipath noise occurrence frequency to be outputted is acquired according to the counted value in the previous period (step S3).

According to the multipath noise occurrence frequency, the time constant is set in the time constant circuit 8. The output from the time constant circuit 8 is supplied to the separation controlling circuit (step S4).

The separation controlling circuit 9 transmits the signal for controlling the stereo-separation (ratio in separation of the left and the right stereo signals) from the stereo-demodulated state to the monaural-demodulated state using a control threshold value corresponding to a pulse peak value (step S5).

The stereo decoder 5 adjusts the stereo-separation of the left and right audio signals according to the separation controlling signal from the separation controlling circuit 9 to be outputted (step S6).

At this time, according to the above time constant as shown in Fig. 4E, the transition time ("attack time") from the stereo mode to the monaural mode and the restoration time ("recovery time") from the monaural mode to the stereo mode are adjusted.

Incidentally, the transition time from the stereo mode to the monaural mode need not be controlled according to the time constant.

By the procedure described above, according to the multipath noise occurrence frequency, the restoration time from the monaural mode to the stereo mode is controlled. The control is made in such a manner that the restoration time from the monaural mode to the stereo mode is lengthened as the multipath noise occurrence frequency is increased, whereas the restoration time from the monaural mode to the stereo mode is shortened as the multipath noise occurrence frequency is decreased.

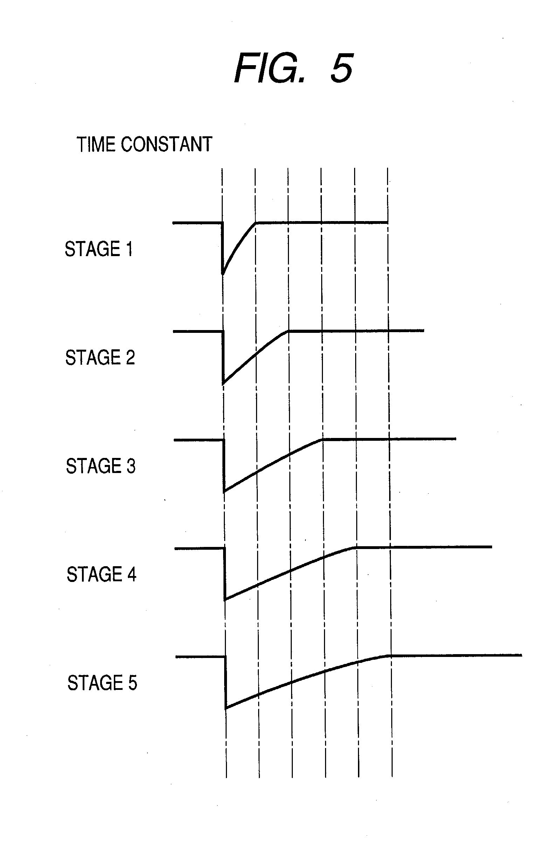

An explanation will be given of the setting the time constant according to the multipath noise occurrence frequency with reference to an example. Fig. 5 is a waveform chart in which five stages are set according to the multipath noise occurrence frequency of the multipath noise.

The case where the multipath noise occurrence frequency is the lowest corresponds to stage 1 in the time constant in Fig. 5. The case where the multipath noise occurrence frequency of the multipath noise is the highest corresponds to stage 5 in the time constant in Fig. 5. Each of the stages 1 through 5 in the time constants is set at the count value (the number of pulses contained in the output signal from the multipath noise detecting circuit 7).

For example, in a case where the count value counted during the previous period shown in Fig. 4D is 1, stage 1 in the time constant shown in Fig. 5 is adopted. In a case where the count value is 2, stage 2 in the time constant is adopted. In a case where the count value is 3, stage 3 in the time constant is adopted. In a case where the count value is 4, stage 4 in the time constant is adopted. In a case where the count value is more than 5, stage 5 in the time constant is adopted. The count value corresponding to each time constant may be varied as required according to the length of the counting period or the number of time constants to be set.

The restoration time ("recovery time") from the monaural mode to the stereo mode is several milliseconds to several seconds (3-5 seconds).

The counter 10 employed for counting may be an analog circuit or digital circuit.

In accordance with this embodiment, since the time constant is controlled according to the multipath noise occurrence frequency of the multipath noise, the control is made in such a manner that in the area (with the high multipath noise occurrence frequency) where the multipath noise occurs frequently, the restoration time from the monaural mode to the stereo mode is set longer, whereas in the area (with the low multipath noise occurrence frequency) where the multipath noise occurs occasionally, the restoration time from the monaural mode to the stereo mode is set shorter.

Thus, there can be provided a signal receiving method and apparatus capable of setting a restoration time from the monaural mode to the stereo mode to an optimum value in any signal receiving area to improve audibility, thereby reducing the influence of a multipath noise on sound quality.

Incidentally, the present invention can be applied to the signal receiving method for reducing the influence of the multipath noise on the sound quality in not only the FM receiver exemplified in the embodiment described above, but also the signal receiving apparatus for e.g. VHF and UHF.

Although the present invention has been shown and described with reference to a specific preferred embodiment, various changes and modifications will be apparent to those skilled in the art from the teachings herein. Such changes and modifications as are obvious are deemed to come within the spirit, scope and contemplation of the invention as defined in the appended claims.

## Claims

1. A signal receiving method comprising:
acquiring an occurrence frequency of a multipath noise in a signal by detecting a number of multipath noises occurred in the signal within a predetermined time; and
controlling a stereo separation ratio for decoding the signal in accordance with the occurrence frequency of the multipath noise.

2. The signal receiving method as claimed in claim 1, wherein the controlling of the stereo separation ratio comprises:
controlling a time constant in accordance with the occurrence frequency of a multipath noise; and
controlling a stereo separation ratio for decoding the signal in accordance with the time constant.

3. The signal receiving method as claimed in claim 1, wherein the controlling of the stereo separation ratio comprises:
controlling a restoration time from a monaural mode to a stereo mode in accordance with the occurrence frequency of the multipath noise.

4. The signal receiving method as claimed in claim 3, wherein the controlling of the stereo separation ratio comprises:
lengthening the restoration time as the multipath noise occurrence frequency is increased; and
shortening the restoration time as the multipath noise occurrence frequency is decreased.

5. A signal receiving apparatus comprising:
a multipath detection section configured to acquire an occurrence frequency of a multipath noise in a signal by detecting a number of multipath noises occurred in the signal within a predetermined time; and
a control section configured to control a stereo separation ratio for decoding the signal in accordance with the occurrence frequency of the multipath noise.

6. The signal receiving apparatus as claimed in claim 5, wherein the control section comprises:
a time constant part configured to control a time constant in accordance with the occurrence frequency of a multipath noise; and
a separation controlling part configured to control a stereo separation ratio for decoding the signal in accordance with the time constant.

7. The signal receiving apparatus as claimed in claim 5, wherein the control section comprises:
a separation controlling part configured to control a restoration time from a monaural mode to a stereo mode in accordance with the occurrence frequency of the multipath noise.

8. The signal receiving apparatus as claimed in claim 7, wherein the separation controlling part lengthens the restoration time as the multipath noise occurrence frequency increases, and shortens the restoration time as the multipath noise occurrence frequency decreases.

9. The signal receiving apparatus as claimed in claim 8, wherein the signal receiving apparatus is installed on a mobile object.
